# EUROPEAN PATENT APPLICATION

(11) **EP 4 848 138 A1**
(43) Date of publication of application: **02.12.2026**
(21) Application number: 24920086.6
(22) Date of filing: 25.12.2024
(51) Int. Cl.: G06K 7/10, G01N 35/02, H01Q 3/44, H04B 5/26

(54) **AUTOMATIC ANALYSIS DEVICE**

(30) Priority: 24.01.2024 JP 2024008378
(71) Applicant: Hitachi High-Tech Corporation, Minato-ku Tokyo 105-6409 (JP)
(72) Inventor: SUZUKI, Takuya, Tokyo 105-6409 (JP); HANADA, Ayaki, Tokyo 105-6409 (JP)
(74) Representative: MERH-IP Matias Erny Reichl Hoffmann Patentanwälte PartG mbB
(86) International application number: PCT/JP2024/045976
(87) International publication number: WO 2025/158863

(57) **Abstract**

[Problem]

Provided is an automatic analyzer capable of preventing misreading of adjacent tags while maintaining communication distance.

[Solution]

The automatic analyzer includes: a mounting portion on which a container to which a wireless tag for storing information is attached can be placed; a wireless tag reader/writer antenna that irradiates the wireless tag with electromagnetic waves and receives electromagnetic waves emitted from the wireless tag by the irradiation of the electromagnetic waves; and a convergence unit that converges the electromagnetic waves irradiated from at least the antenna in a direction of the wireless tag.

## Description

### Technical Field

The present invention relates to an automatic analyzer.

### Background Art

Patent Literature 1 discloses a sample analyzer that includes: a reagent holder with arrangement of a plurality of reagent holding units each including a placement portion on which a reagent container affixed with a storage medium is placed, and a radio wave communication portion that transmits/receives radio waves from/to the storage medium of the reagent container placed on the placement portion; and a radio wave blocker that blocks a communication path for radio waves between a radio wave communication portion of one reagent holding unit and a storage medium of a reagent container placed in another reagent holding unit adjacent to the one reagent holding unit.

### Citation List

### Patent Literature

Patent Literature 1: Japanese Unexamined Patent Application Publication No. 2012-198174

### Summary of Invention

### Technical Problem

For the purpose of preventing the misreading/miswriting of information from/to the storage medium of a reagent container other than the reagent container of interest, Patent Literature 1 is characterized by including the radio wave blocker that blocks a communication path for radio waves between a radio wave communication portion of one of the reagent holding units and a storage medium of a reagent container placed in another reagent holding unit adjacent to the one reagent holding unit. The radio wave blocker is a so-called electromagnetic shield, which blocks electromagnetic waves by use of electrically conductive material such as metallic material. In the case of this scheme, upon irradiation of electromagnetic waves to a metallic plate, eddy current occurs in the metallic plate. The eddy current generates electromagnetic waves that cancel electromagnetic waves irradiated from the radio wave communication portion (antenna). Therefore, the communicable distance between the radio wave communication portion and the storage medium (tag) is decreased, so that a read error may occur potentially.

It is an object of the present invention to provide an automatic analyzer capable of preventing misreading of adjacent tags while maintaining communication distance. Solution to Problem

The configuration of the present invention for achieving the above-mentioned object is as follows.

An automatic analyzer includes: a mounting portion on which a container to which a wireless tag for storing information is attached can be placed; a wireless tag reader/writer antenna that irradiates the wireless tag with electromagnetic waves and receives electromagnetic waves emitted from the wireless tag by the irradiation of the electromagnetic waves; and a convergence unit that converges the electromagnetic waves irradiated from at least the antenna in a direction of the wireless tag.

### Advantageous Effects of Invention

According to the present invention, an automatic analyzer is provided which is capable of preventing misreading of adjacent tags while maintaining the communication distance.

### Brief Description of Drawings

FIG. 1 is a schematic view of an automatic analyzer.
FIG. 2 is a perspective view of a ferrite.
FIG. 3 is a schematic view of ferrite mounting.
FIG. 4 is a conceptual diagram illustrating the optimal placement of the ferrite.
FIG. 5 is a perspective view of the ferrite and an antenna.
FIG. 6 is a schematic diagram of a resonant coil.
FIG. 7 is a schematic view of resonant coil mounting.
FIG. 8 is a perspective view of the resonant coil and the antenna.
FIG. 9 illustrates the concept of the direction of electromagnetic waves in a conventional automatic analyzer.
FIG. 10 is a schematic diagram of misreading prevention measures according to the conventional technology. Description of Embodiments

Embodiments in accordance with the present invention will be described with reference to the accompanying drawings.

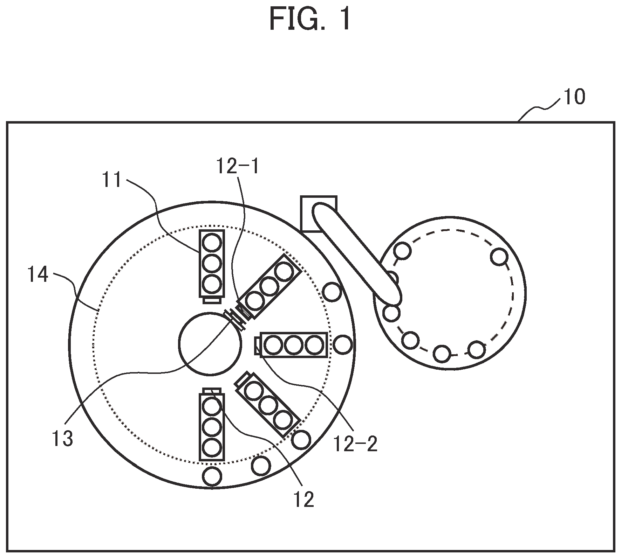

Fig. 1 is a schematic view of an automatic analyzer as an example. In an automatic analyzer 10, information on a reagent to be used, and an installation position of a reagent container 11 are required to be registered in the automatic analyzer 10 before the analysis operation is performed. The reagent container 11 is affixed with a wireless tag 12 storing reagent information. The wireless tag 12 affixed to the reagent container 11 is irradiated with electromagnetic waves from an antenna (reader/writer) 13 for reading the reagent information stored in the wireless tag 12. Then, the information stored in the wireless tag 12 is read from electromagnetic waves returning from the wireless tag 12, and thus the reagent information and the installation position are registered in the automatic analyzer 10. A reagent disk 14 (referred to as a "mounting portion" in the claims) is capable of being mounted with a plurality of reagent containers 11, and rotates in a horizontal plane. By a configuration that rotates the reagent disk 14 to be capable of changing the relative position relationship between the antenna 13 and the wireless tag 12, the reagent information of the plurality of reagent containers 11 mounted on the reagent disk 14 is able to be registered in the automatic analyzer 10. The above is a typical reagent registering operation of the automatic analyzer 10.

### First Embodiment

An example is illustrated where a ferrite (ceramics consisting principally of ferric oxide) is used as a member that converges electromagnetic waves in a direction of the wireless tag (referred to as a "convergence unit" in the claims).

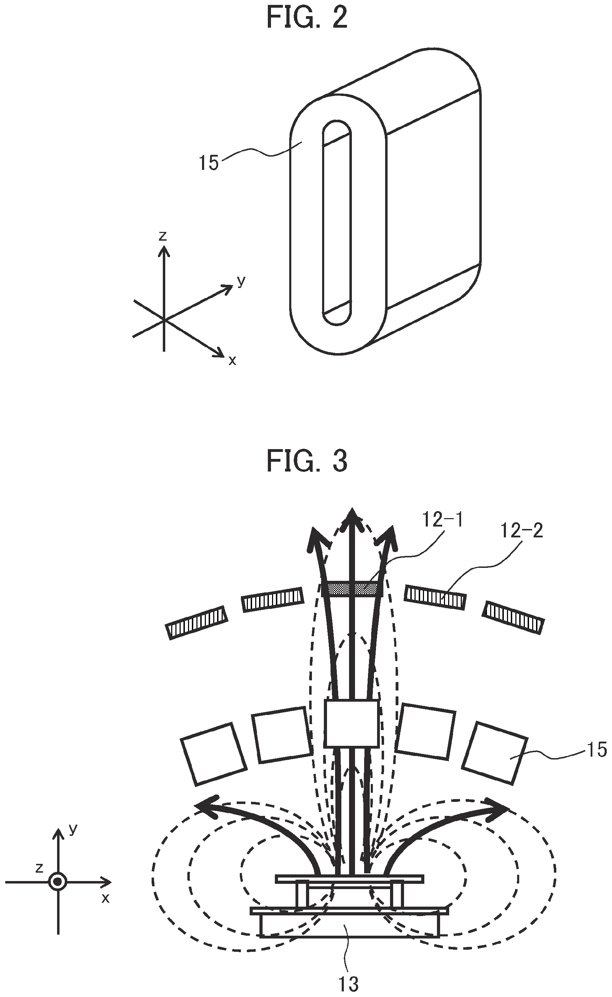

Fig. 2 is a perspective view of a ferrite. The shape of a ferrite 15 illustrated in Fig. 2 is one example, and may be a rectangular parallelepiped shape or a toroidal shape. Fig. 3 is a schematic view of ferrite mounting. The ferrite 15 is placed to be spaced at a predetermined distance from an antenna (hereinafter referred to as an "antenna") 13 of RFID reader/writer (referred to as "wireless tag reader/writer" in the claims) and from a wireless tag (RF tag, hereinafter referred to as a "wireless tag") 12-1, 12-2. In this case, the ferrite 15 is preferably located on a line connecting the center point of the antenna 13 and the center point of the wireless tag 12 and also spaced at a predetermined distance from the antenna 13 and the wireless tag 12-1, 12-2.

It has been confirmed by experiment of the inventors that, where the ferrite is affixed to the antenna, the electromagnetic waves emitted from the antenna may be weakened, thus, in some cases, the information of the wireless tag may be unreadable. Also, if the ferrite is located too close to the wireless tag, the convergence effect of the electromagnetic waves is not fully exerted, so that a wireless tag affixed to an adjacent container may be potentially misread.

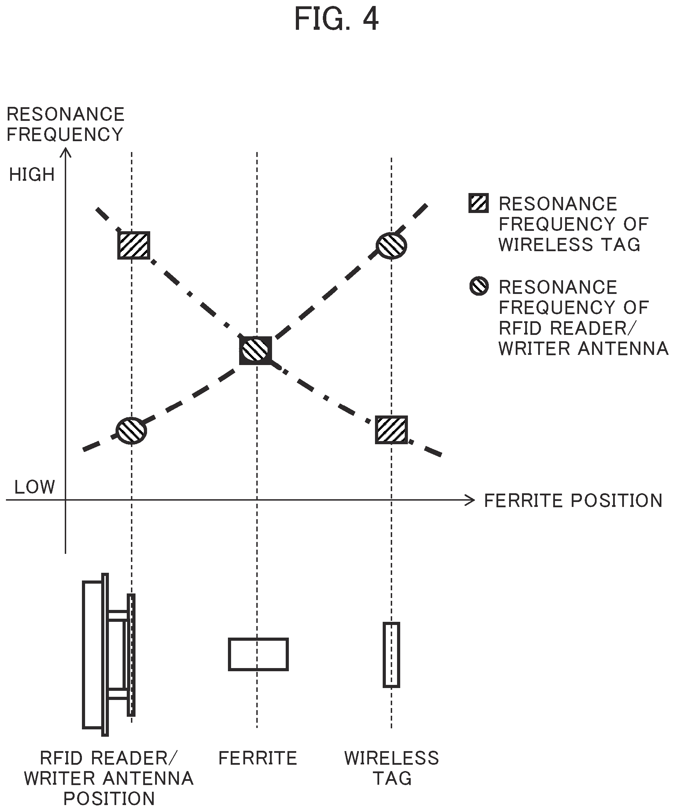

Fig. 4 is a conceptual diagram of the relationship between the placement of the ferrite between antenna position and wireless tag position represented by the horizontal axis, and the resonance frequency represented by the vertical axis. The RFID reader/writer antenna and the wireless tag have respective specific inductances L, capacitances C and resonance frequencies represented as 1/(2π√LC). The ferrite is placed between the RFID reader/writer antenna and the wireless tag to form magnetic coupling to the RFID reader/writer antenna and the wireless tag, so that component L varies in magnitude. Thus, each of the RFID reader/writer antenna and the wireless tag varies in resonance frequency.

When the resonance frequencies of the RFID reader/writer antenna and the wireless tag are closest to each other, the transmission efficiency of the electromagnetic wave energy is higher. Therefore, in Fig. 4, it is seen that placing the ferrite in a midpoint position between the RFID reader/writer antenna and the wireless tag facilitates communications with the highest transmission efficiency, that is, fewer misreadings of information of an adjacent wireless tag.

It has been confirmed by experiment of the inventors that misreadings are actually fewer when the ferrite is placed in a position closer to the wireless tag than the midpoint position between the RFID reader/writer antenna and the wireless tag.

From this, it is seen that a parameter for preventing misreading is not limited to only the degree of transmission efficiency of the electromagnetic wave energy. The inventors thinks that when the ferrite is placed in a position close to the wireless tag in order to prevent the electromagnetic wave energy to be leaked to adjacent wireless tags, the effect of converging the electromagnetic waves is exerted to prevent misreading.

It is seen, based on the experimental data and the relationship of the resonance frequency between the RFID reader/writer antenna and the wireless tag, that when the distance from the RFID reader/writer antenna to the wireless tag is set at 1, the ferrite is desirably placed between 1/2 and 3/4 in terms of misreading prevention.

The ferrite may be located between the antenna 13 and the wireless tag 12 over a period of time from when the antenna 13 irradiates the wireless tag 12 with the electromagnetic waves until the electromagnetic waves to be responded are returned from the wireless tag 12. The ferrites 15 may be placed in face-to-face positions with all the wireless tags 12 as illustrated in Fig. 3. Alternatively, the ferrite 15 may be placed in only one face-to-face position with the wireless tag to be read 12-1. Still alternatively, if a plurality of antennas 13 is installed, the ferrites may be installed respectively in face-to-face positions with the antennas.

A column may be erected on the bottom of the reagent disk 14 and the ferrite 15 may be secured to the column. Alternatively, the ferrite 15 may be secured to a member extending from a reagent tray (not shown) for mounting the reagent container 11 on the reagent disk 14.

In the embodiment, the fact that the ferrite 15 is a substance having high magnetic permeability is utilized to allow the electromagnetic waves irradiated from the antenna 13 to be collected on the ferrite 15, so that a leakage of the electromagnetic waves to an adjacent wireless tag 12-2 is inhibited so as to cause the electromagnetic waves to converge to only the wireless tag to be read 12-1. As a result, the misreading of the adjacent wireless tag 12-2 may be prevented and only the wireless tag to be read 12-1 may be read. Also, because of a low energy loss when the electromagnetic waves pass through the inside of the ferrite 15, a decrease in communication distance is able to be prevented.

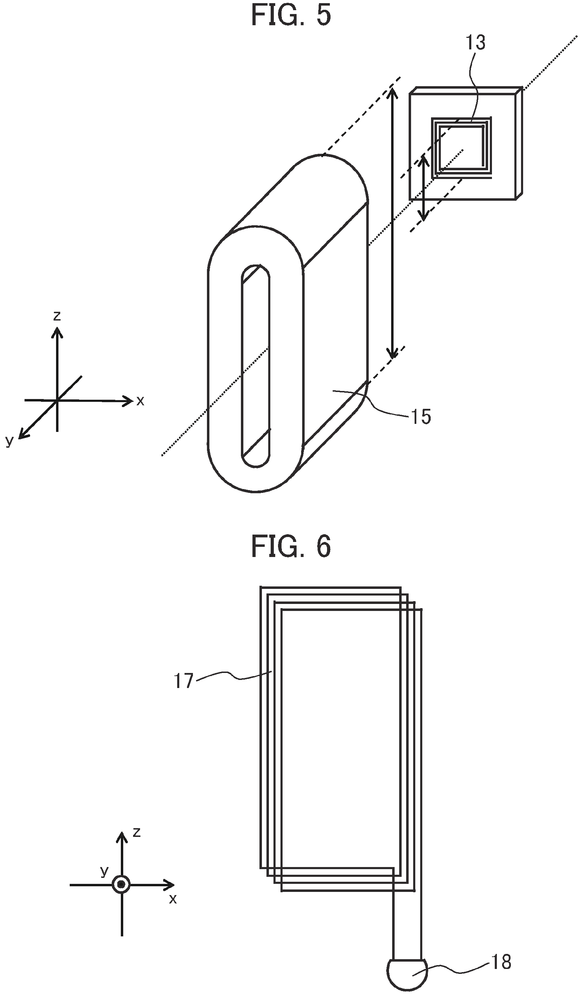

Fig. 5 is a perspective view of the ferrite 15 and the antenna 13. The larger the ferrite dimensions in the x direction and the y direction, the more the convergence effect of the electromagnetic waves is expected. However, an extremely large ferrite dimension in the x direction causes a decrease in distance from a ferrite placed adjacent thereto, and thus the electromagnetic waves are drawn toward the adjacent ferrite. This brings about a reduction in the effect of conversion of the electromagnetic waves to the wireless tag to be read 12-1. Depending on the installation interval between reagent containers, the interval between wireless tags affixed to the reagent containers is changed, which brings about a change in an optimum value for the ferrite dimension in the x direction. Also depending on the distance between the ferrite and the wireless tag, an optimum value for in the ferrite dimension in the x-direction is changed. Therefore, the optimum value is preferably obtained experimentally in agreement with the placement in the automatic analyzer.

Also, the ferrite dimension in the z direction is configured to be larger than an antenna dimension in the z direction of the antenna 13. For the ferrite dimension in the z direction, because there is no risk of misreading of an adjacent-placed wireless tag, a dimension is relatively freely taken. For example, a structure may be adopted such that a groove portion into which the ferrite is fitted is placed in the bottom of the reagent disk and the ferrite is placed by being fitted into the groove portion. It is noted that the ferrite used in the present embodiment is structured to have a hole opening in the y direction as illustrated in Fig. 2, but this depends on convenience in terms of ferrite manufacturing. The up-and-down orientation in the z direction forms an arc, which equally depends on convenience in terms of manufacturing, and no hole may be bored or the side of the up-and-down orientation may be formed in a linear shape.

### Second Embodiment

An example is illustrated where a resonant coil is used as a member that converges electromagnetic waves in a direction of the wireless tag.

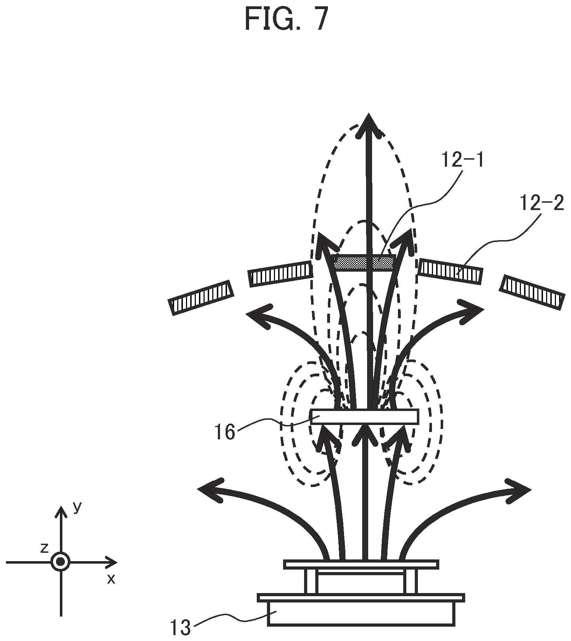

Fig. 6 is a schematic view of a resonant coil. Fig. 7 is a schematic view of resonant coil mounting. A resonant coil 16 is an LC circuit composed of a coil 17 and a capacitor 18, in which the inductance of the coil 17 and the capacitance of the capacitor 18 are adjusted such that the resonance frequency coincides with the frequency of the electromagnetic waves irradiated from the antenna 13. For the coil 17, a metal wire may be used or a trace patterned on the substrate may be used. The resonant coil 16 is placed to be spaced at a predetermined distance from the antenna 13 and the wireless tag 12. The resonant coil 16 may be mounted in any mounting position as long as it is located on a line connecting the center point of the antenna 13 and the center point of the wireless tag 12 and also spaced at a predetermined distance from the antenna 13 and the wireless tag 12-1, 12-2. As illustrated in Fig. 6, the resonant coil 16 may be placed in only a face-to-face position with the wireless tag to be read 12-1, alternatively the resonant coil 16 may be placed in face-to-face positions with all of the wireless tags 12.

In the embodiment, a phenomenon of magnetic field resonance between the antenna 13 and the resonant coil 16 is utilized.

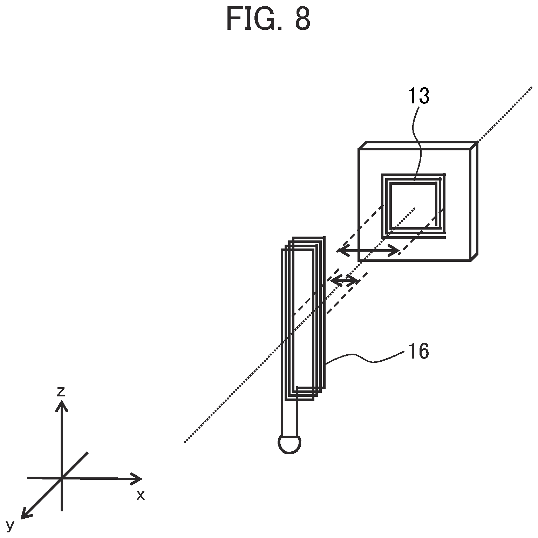

Because the resonance frequencies of the antenna 13 and the resonant coil 16 coincide with each other, the energy of the electromagnetic waves irradiated from the antenna 13 is transmitted to the resonant coil 16, and in turn the electromagnetic waves is re-irradiated from the resonant coil 16. Fig. 8 is a perspective view of the resonant coil and the antenna. By a structure of a narrower width of the resonant coil 16 in the x direction than the width of the antenna 13 in the x direction, it has been experimentally verified to inhibit expansion of electromagnetic wave. By inhibiting the expansion of electromagnetic wave, the electromagnetic waves are converged in the direction of the wireless tag to be read 12-1 to prevent misreading of the adjacent wireless tag 12-2, so that only the wireless tag to be read 12-1 is able to be read. Also, because of the utilization of magnetic field resonance, an energy loss during electromagnetic waves transmission is able to be reduced, and thus a decrease in communication distance is able to be prevented.

By installing the above-described member converging the electromagnetic waves, the misreading of the adjacent wireless tag is able to be prevented without a decrease in communication distance. The unnecessity of ensuring a larger installation interval between reagent containers enables achievement of downsizing of the apparatus body because of downsizing of the reagent disk, and an increase in the number of installed reagent containers in comparison with the reagent disk of the same size. It is noted that not only the ferrite and the resonant coil may be separately used, but also the ferrite and the resonant coil may be used in combination. It has been confirmed by experiment of the inventors that, when compared between the ferrite and the resonant coil, if the resonant coil is placed in an optimum position, the resonant coil produces greater effect of preventing misreading, but, depending on the installation position of the resonant coil, in some cases, the Information of the wireless tag may not be read. In short, there is a possibility that the ferrite is more excellent in terms of robustness. On the other hand, the resonant coil is able to be manufactured at lower cost as compared with the ferrite. Depending on the size of the automatic analyzer and/or the like, it is preferable to select and adopt any of the ferrite and the resonant coil as appropriate.

### Additional Statement

In the above embodiments, a member that converges the electromagnetic waves in the direction of the wireless tag 12 is installed on a line connecting the center point of the antenna 13 and the center point of the wireless tag 12. Thereby, the misreading of the adjacent wireless tag 12-2 is capable of being prevented while maintaining the communication distance, and only the wireless tag to be read 12-1 is capable of being read. The embodiments show an example where a reagent container is mounted on the reagent disk 14 and the wireless tag 12 affixed to the reagent container 11 is read from the inner radius side through the antenna 13. It is noted that the embodiments are applicable to the case of writing information in a wireless tag because information is written to the wireless tag through electromagnetic waves between the wireless tag 12 and the antenna 13.

### Conventional Art

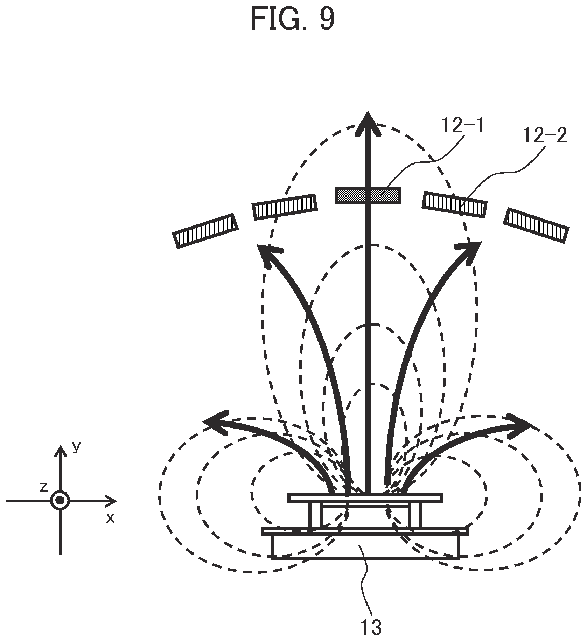

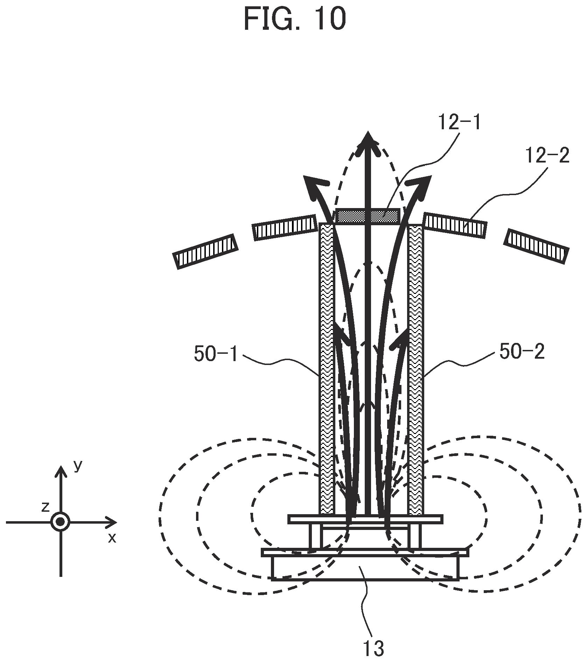

Fig. 9 is a diagram showing a concept of direction of the electromagnetic waves with which the antenna 13 irradiates the wireless tag 12 in a conventional automatic analyzer. It is seen that the wireless tag to be read 12-1 is irradiated with the electromagnetic waves from the antenna 13 and the adjacent wireless tag 12-2 positioned adjacent thereto is also irradiated with the electromagnetic waves. In this case, the antenna 13 may potentially misread the electromagnetic waves radiated from the adjacent wireless tag 12-2 by the electromagnetic waves irradiated from the antenna 13. Fig. 10 is a schematic diagram of misreading prevention measures according to the invention described in Patent Literature 1. Misreading is prevented by installing the radio wave blocker 50-1, 50-2 that blocks a communication path for radio waves with a storage medium (corresponding to the adjacent wireless tag 12-2) of a reagent container placed in another reagent holding unit adjacent to each other.

### List of Reference Signs

10: automatic analyzer
11: reagent container
12: wireless tag
12-1: wireless tag to be read
12-2: adjacent wireless tag
13: antenna
14: reagent disk
15: ferrite
16: resonant coil
17: coil
18: capacitor
50-1, 50-2: radio wave blocker

## Claims

1. An automatic analyzer comprising:
a mounting portion on which a container to which a wireless tag for storing information is attached can be placed;
a wireless tag reader/writer antenna that irradiates the wireless tag with electromagnetic waves and receives electromagnetic waves emitted from the wireless tag by the irradiation of the electromagnetic waves; and
a convergence unit that converges the electromagnetic waves irradiated from at least the antenna in a direction of the wireless tag.

2. The automatic analyzer according to claim 1, wherein
the antenna and the container include a movement mechanism that moves a relative position of the antenna and the container.

3. The automatic analyzer according to claim 1, wherein
the convergence unit has at least a ferrite or a resonant coil.

4. The automatic analyzer according to claim 1, wherein
the convergence unit is located 1/2 to 3/4 of a distance from the antenna to the wireless tag, when the distance from the antenna to the wireless tag is 1.

5. The automatic analyzer according to claim 1, wherein
the convergence unit has at least a ferrite, and the ferrite has a height dimension greater than a height dimension of the antenna.

6. The automatic analyzer according to claim 1, wherein
the convergence unit has at least a resonant coil, and the resonance coil has a lateral width smaller than a lateral width of the antenna.

7. The automatic analyzer according to any one of claims 1 to 6, wherein
the container is a reagent container, the automatic analyzer includes a reagent disk on which a plurality of the reagent containers can be placed, the antenna is provided on a non-rotating member in a direction of a rotation center of the reagent disk, and the wireless tag is attached to a surface of the reagent container close to the antenna.
